# FASCICULE DE BREVET EUROPEEN

(11) **EP 3 354 577 B1**
(45) Date de publication et mention de la délivrance du brevet: **27.03.2019**
(21) Numéro de dépôt: 17205366.2
(22) Date de dépôt: 05.12.2017
(51) Int. Cl.: B64D 29/06, F02K 1/70

(54) **NACELLE D'UN TURBOREACTEUR COMPORTANT UN VOLET INVERSEUR**
STRAHLTRIEBWERKGONDEL, DIE EINE SCHUBUMKEHRKLAPPE UMFASST
TURBOJET NACELLE COMPRISING A THRUST REVERSER FLAP

(30) Priorité: 31.01.2017 FR 1750798
(43) Date de publication de la demande: 01.08.2018
(73) Titulaire: Airbus Operations S.A.S., 31060 Toulouse (FR); Airbus (S.A.S.), 31700 Blagnac (FR)
(72) Inventeur: HARAMBURU, Eric, 31770 COLOMIERS (FR); JOLIVET, Nicolas, 31470 FONTENILLES (FR); OBERLE, Patrick, 82600 VERDUN SUR GARONNE (FR)
(74) Mandataire: Gicquel, Olivier Yves Gérard

(56) Documents cités:
- FR-A1- 2 486 153
- FR-A1- 3 010 144
- US-A1- 2014 239 083

## Description

La présente invention concerne une nacelle d'un turboréacteur double flux qui comporte au moins un volet inverseur, un turboréacteur double flux comportant une telle nacelle et un moteur, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur.

La nacelle comporte au moins un volet inverseur qui est mobile entre une position fermée dans laquelle il vient en continuité avec la surface extérieure de la nacelle et une position ouverte dans laquelle il ouvre une fenêtre dans la paroi de la nacelle pour expulser l'air du flux secondaire vers l'extérieur.

Le volet inverseur est monté mobile en rotation sur la structure de la nacelle de manière à passer d'une position fermée où le volet inverseur n'obture pas la veine du flux secondaire à une position ouverte où le volet inverseur obture la veine.

Ainsi en position ouverte, le volet inverseur détourne une partie du flux secondaire vers l'extérieur par la fenêtre.

Bien que le mécanisme d'un tel volet inverseur donne entière satisfaction, il est souhaitable de trouver des mécanismes différents.

Le document FR 2 486 153 A divulgue une nacelle pour un turboréacteur double flux, ladite nacelle comportant:
- un capot fixe et un capot mobile mobile en translation selon une direction de translation entre une position de fermeture dans laquelle il est rapproché du capot fixe et une position d'ouverture dans laquelle il est éloigné du capot fixe vers l'arrière,
- un actionneur prévu pour déplacer le capot mobile de la position de fermeture à la position d'ouverture et inversement,
- une fenêtre délimitée en amont par le capot fixe et en aval par le capot mobile, ladite fenêtre étant ouverte entre une veine d'un flux secondaire et l'extérieur de la nacelle,
- un volet inverseur monté mobile en rotation autour d'un axe de rotation entre une position fermée dans laquelle il obture la fenêtre et une position ouverte dans laquelle il n'obture pas la fenêtre, et
- un mécanisme d'entraînement prévu pour coordonner le passage de la position fermée à la position ouverte du volet inverseur avec le passage de la position de fermeture à la position d'ouverture du capot mobile et inversement.

Un objet de la présente invention est de proposer une nacelle comportant au moins un volet inverseur avec un mécanisme d'ouverture différent.

A cet effet, est proposée une nacelle pour un turboréacteur double flux telle que revendiquée dans la revendication 1.

L'invention propose également un turboréacteur double flux comportant un moteur et une nacelle, et où une veine d'un flux secondaire est délimitée entre la nacelle et le moteur.

L'invention propose également un aéronef comportant au moins un tel turboréacteur double flux.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant une nacelle selon l'invention,
la Fig. 2 est une vue en perspective de la nacelle selon l'invention en position ouverte,
la Fig. 3 est une vue de côté selon l'invention en position ouverte avec son mécanisme d'entraînement, et
la Fig. 4 est une vue en perspective de la nacelle selon l'invention en position intermédiaire avec son mécanisme d'entraînement.

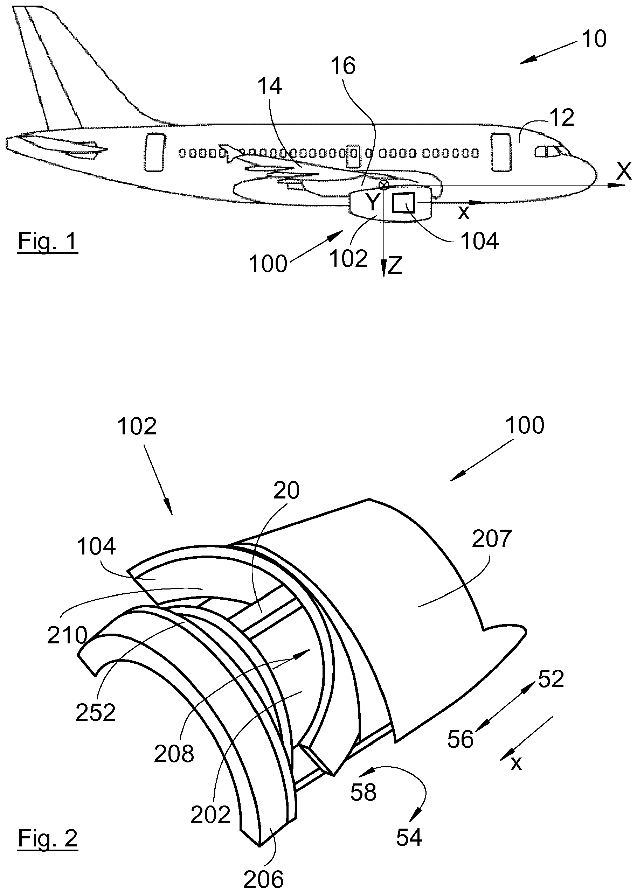

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

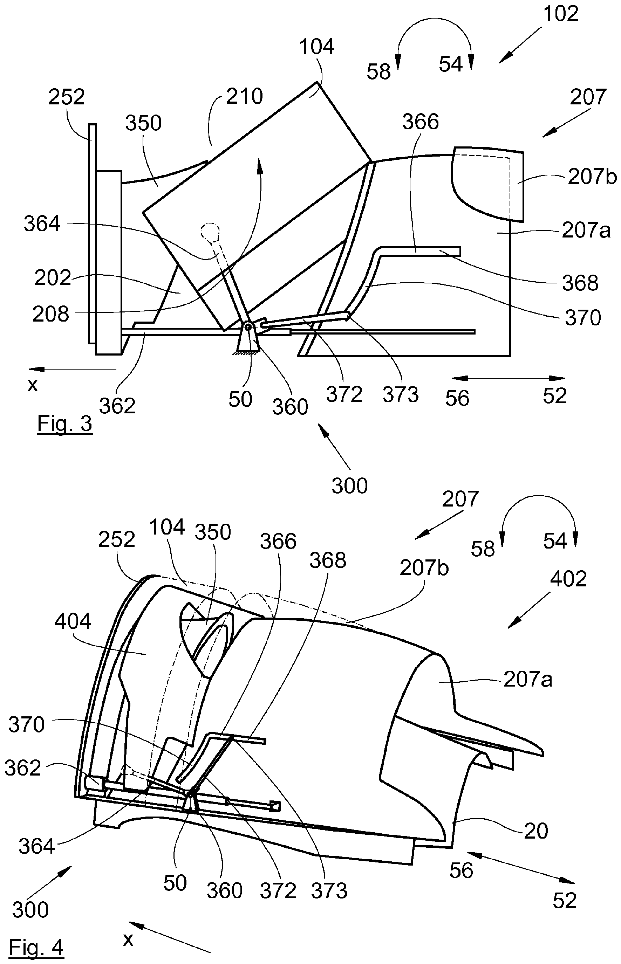

Les Figs. 2 et 3 montrent une nacelle 102 selon un premier mode de réalisation de l'invention et la Fig. 4 montre une nacelle 402 selon un deuxième mode de réalisation de l'invention.

Le turboréacteur double flux 100 comporte une nacelle 102, 402 et un moteur 20 qui est logé à l'intérieur de la nacelle 102, 402, ainsi qu'une veine 202 entre la nacelle 102, 402 et le moteur 20 dans laquelle circule le flux secondaire 208.

Dans la description qui suit, et par convention, on appelle x l'axe longitudinal de la nacelle 102, 402 qui est parallèle à l'axe longitudinal X de l'aéronef 10 ou axe de roulis, orienté positivement dans le sens d'avancement de l'aéronef 10, on appelle Y l'axe transversal ou axe de tangage de l'aéronef qui est horizontal lorsque l'aéronef est au sol, et Z l'axe vertical ou hauteur verticale ou axe de lacet lorsque l'aéronef est au sol, ces trois directions X, Y et Z étant orthogonales entre elles et formant un repère orthonormé ayant pour origine le centre de gravité de l'aéronef.

La nacelle 102, 402 comporte au moins un volet inverseur 104. En particulier, il peut y avoir deux volets inverseurs 104 disposés l'un en face de l'autre, ou quatre volets inverseurs 104 répartis régulièrement sur la périphérie de la nacelle 102, 402.

Dans la description qui suit, l'invention est plus particulièrement décrite pour un volet inverseur 104, mais elle s'applique de la même manière pour chaque volet inverseur 104 lorsqu'il y en a plusieurs.

La nacelle 102, 402 présente pour chaque volet inverseur 104, une fenêtre 210 ouverte entre la veine 202 et l'extérieur de la nacelle 102, 402.

La nacelle 102, 402 présente un capot fixe 206 qui délimite la fenêtre 210 en amont par rapport à l'axe longitudinal x et qui est monté fixe sur une structure de la nacelle 102, 402.

La nacelle 102, 402 présente un capot mobile 207 qui délimite la fenêtre 210 en aval par rapport à l'axe longitudinal x. Le capot mobile 207 est monté mobile en translation selon une direction de translation globalement parallèle à l'axe longitudinal x sur la structure de la nacelle 102, 402. La translation est réalisée par tous moyens appropriés comme par exemple des glissières entre la structure de la nacelle 102, 402 et le capot mobile 207.

Le capot fixe 206 et le capot mobile 207 présentent une surface extérieure qui constitue l'enveloppe extérieure de la nacelle 102, 402 et une surface intérieure qui constitue une paroi extérieure de la veine 202.

Le capot mobile 207 est mobile entre une position de fermeture dans laquelle il est rapproché du capot fixe 206 et une position d'ouverture dans laquelle il est éloigné du capot fixe 206 vers l'arrière de manière à élargir la fenêtre 210.

Le volet inverseur 104 est monté mobile en rotation autour d'un axe de rotation 50 sur la structure de la nacelle 102, 402 entre une position fermée dans laquelle il obture la fenêtre 210 et une position ouverte dans laquelle il n'obture pas la fenêtre 210. Dans le mode de réalisation de l'invention présenté sur les Figs. 2 à 4, l'axe de rotation 50 est ici perpendiculaire à l'axe longitudinal x.

En position fermée, le volet inverseur 104 se positionne entre le capot fixe 206 et le capot mobile 207 qui est en position de fermeture et le volet inverseur 104 prolonge le capot mobile 207, et le capot fixe 206 prolonge le volet inverseur 104. En position ouverte, le capot mobile 207 est déplacé vers l'arrière pour faciliter la manoeuvre du volet inverseur 104 qui passe de la position fermée à la position ouverte.

Lorsque le volet inverseur 104 est en position fermée, la surface extérieure du volet inverseur 104 s'étend entre la surface extérieure du capot fixe 206 et la surface extérieure du capot mobile 207 et sa surface intérieure s'étend entre la surface intérieure du capot fixe 206 et la surface intérieure du capot mobile 207.

Lorsque le volet inverseur 104 est en position ouverte, le volet inverseur 104 vient en travers de la veine 202 et dévie au moins une partie du flux secondaire 208 vers l'extérieur à travers la fenêtre 210.

Le passage de la position fermée à la position ouverte du volet inverseur 104 est coordonné mais décalé avec le passage de la position de fermeture à la position d'ouverture du capot mobile 207 et inversement.

Cette coordination est assurée par un mécanisme d'entraînement 300 qui est représenté sur les Figs. 3 et 4 et qui réalise, à partir de la position fermée et de la position de fermeture, une première combinaison assurant :
- une translation vers l'arrière (flèche 52) du capot mobile 207 selon une direction de translation globalement parallèle à l'axe longitudinal x qui assure le déplacement du capot mobile 207 de la position de fermeture à la position d'ouverture, puis
- une rotation (flèche 54) du volet inverseur 104 autour de l'axe de rotation 50 qui assure le déplacement du volet inverseur 104 de la position fermée à la position ouverte.

A l'inverse, le passage de la position ouverte à la position fermée du volet inverseur 104 est assuré par le même mécanisme d'entraînement 300 qui est également prévu pour réaliser une deuxième combinaison assurant à partir de la position ouverte et de la position d'ouverture :
- une rotation (flèche 58) en sens inverse du volet inverseur 104 autour de l'axe de rotation 50 qui assure le retour du volet inverseur 104 de la position ouverte à la position fermée, puis
- une translation vers l'avant (flèche 56) du capot mobile 207 selon la direction de translation qui assure le déplacement du capot mobile 207 de la position d'ouverture à la position de fermeture.

Dans le mode de réalisation de la Fig. 4, le volet inverseur 104 présente une longueur selon l'axe longitudinal x qui est réduite par rapport à celle du mode de réalisation précédent.

Pour combler l'espace entre le volet inverseur 104 et le moteur 20, la nacelle 600 présente un volet additionnel 404 qui, en position ouverte/d'ouverture s'étend entre le volet inverseur 104 et le moteur 20 afin d'obturer la veine 202. La mise en place d'un tel volet additionnel 404 permet également d'améliorer la déviation du flux secondaire 208 vers l'avant.

Le volet additionnel 404 est mobile en rotation entre une position escamotée dans laquelle il ne se positionne pas dans la veine 202 et une position active dans laquelle il se positionne en travers de la veine 202 pour dévier le flux secondaire 208. Le passage de la position escamotée à la position active s'effectue de manière coordonnée avec le passage de la position fermée à la position ouverte du volet inverseur 104 et inversement. En position active, le volet additionnel 404 prolonge ainsi le volet inverseur 104 en position ouverte dans la veine 202 jusqu'au moteur 20 pour dévier le flux secondaire 208.

Dans les modes de réalisation de l'invention présentés sur les Figs. 3 et 4, le capot mobile 207 présente une paroi intérieure 207a et une paroi extérieure 207b (en coupe partielle sur la Fig. 3 et en transparence sur la Fig. 4) qui se déplacent de la même manière et simultanément. La paroi extérieure 207b est la paroi qui vient dans le prolongement du volet inverseur 104 en position de fermeture et qui constitue une paroi extérieure de la nacelle 102, 402 et la paroi intérieure 207a définit la surface périphérique de la veine 202 autour du moteur 20.

En position d'ouverture/ouverte, le volet inverseur 104 et le volet additionnel 404 en position active se positionnent en amont de la paroi intérieure 207a et de la paroi extérieure 207b et en travers de la veine 202.

La nacelle 102, 402 présente également une paroi amont 350 qui s'étend en amont de la paroi intérieure 207a par rapport à l'axe longitudinal x et qui constitue une paroi extérieure de la veine 202 autour du moteur 20. La paroi amont 350 est fixe par rapport à la structure de la nacelle 102, 402 et se situe sensiblement au niveau du cadre avant 252. En position de fermeture, au niveau d'une extrémité amont, la paroi intérieure 207a prolonge la paroi amont 350 et en position d'ouverture, la paroi intérieure 207a est éloignée de la paroi amont 350 de manière à ouvrir le passage entre la veine 202 et la fenêtre 210 et à y permettre la mise en place du volet inverseur 104 et du volet additionnel 404.

Le déplacement en translation du capot mobile 207 de la position de fermeture à la position d'ouverture et inversement, est commandé par exemple par un actionneur qui est ici une paire de vérins 362, chacun étant disposé sur un des côtés du capot mobile 207 et monté articulé entre la structure de la nacelle 102, 302, ici, le cadre avant 252, et le capot mobile 207, et plus particulièrement ici la paroi intérieure 207a. Bien sûr, l'actionneur peut prendre une autre forme comme par exemple un moteur ou tout autre moyen approprié pour déplacer un élément en translation.

L'actionneur 362 est commandé par une unité de contrôle, du type processeur, qui commande son déplacement dans un sens ou dans l'autre selon les besoins de l'aéronef 10.

Pour chaque volet inverseur 104, le mécanisme d'entraînement 300 comprend
- deux paliers 360 (un seul est vu sur les Figs.), chacun étant monté fixe sur la structure de la nacelle 102, 402 ici à chaque extrémité latérale du volet inverseur 104, l'axe de chaque palier 360 est ici perpendiculaire à l'axe longitudinal x,
- pour chaque palier 360, un bras de levier 364 dont une première extrémité est montée mobile en rotation sur le palier 360 et dont une deuxième extrémité est montée fixe sur le volet inverseur 104,
- pour chaque bras de levier 364, une glissière 366 solidaire du capot mobile 207 et plus particulièrement ici sur les côtés de la paroi intérieure 207a, chaque glissière 366 comprenant une partie rectiligne 368 dont l'axe est parallèle à la direction de translation du capot mobile 207 et une partie incurvée 370 qui prolonge vers l'avant la partie rectiligne 368,
- pour chaque bras de levier 364, une tringle 372 dont une première extrémité est montée articulée sur le bras de levier 364, et
- pour chaque glissière 366, un coulisseau 373 monté mobile en translation sur la glissière 366 et monté articulé à une deuxième extrémité de la tringle 372.

En position de fermeture/fermée/escamotée, le coulisseau 373 est au niveau de l'extrémité de la partie rectiligne 368 qui est à l'opposé de la partie incurvée 370.

Le fonctionnement est alors le suivant à partir de la position de fermeture/fermée/escamotée :
- l'actionneur 362 déplace (flèche 52) le capot mobile 207 avec la glissière 366 vers la position d'ouverture,
- tant que le coulisseau 373 se déplace le long de la partie rectiligne 368, le volet inverseur 104 reste immobile,
- lorsque le coulisseau 373 atteint la fin de la partie rectiligne 368, il s'engage sur la partie incurvée 370, déclenchant le déplacement (ici l'abaissement) de la deuxième extrémité de la tringle 372 et donc la rotation (flèche 54) du bras de levier 364 qui par l'intermédiaire de sa deuxième extrémité entraîne le basculement du volet inverseur 104.

Le déplacement du capot mobile 207 s'effectue tout le long du processus ci-dessus jusqu'à ce qu'il atteigne la position d'ouverture.

A l'inverse, le fonctionnement est le suivant à partir de la position d'ouverture/ouverte/active :
- l'actionneur 362 déplace (flèche 56) le capot mobile 207 vers la position de fermeture,
- le coulisseau 373 se déplace le long de la partie incurvée 370, cela déclenche le déplacement (ici le relèvement) de la deuxième extrémité de la tringle 372 et donc la rotation (flèche 58) du bras de levier 364 qui par l'intermédiaire de sa deuxième extrémité entraîne le basculement du volet inverseur 104,
- lorsque le coulisseau 373 atteint la fin de la partie incurvée 370, il s'engage sur la partie rectiligne 368 et le volet inverseur 104 arrête son basculement tandis que le capot mobile 207 poursuit son déplacement avec le coulisseau 373 qui se déplace le long de la partie rectiligne 368.

Le déplacement du capot mobile 207 s'effectue tout le long du processus ci-dessus jusqu'à ce qu'il atteigne la position de fermeture.

La glissière 366 peut prendre différentes formes comme par exemple une ferrure rapportée sur le capot mobile 207 ou une rainure.

Dans le mode de réalisation de l'invention présenté sur les Figs. 3 et 4, la première extrémité du bras de levier 364 présente une palette sur laquelle est fixée la tringle 372.

La partie incurvée 370 prend ici globalement la forme d'un arc de cercle ouvert vers l'avant de la nacelle 102, 402. L'ouverture angulaire de l'arc de cercle est ici autour de 30°.

Des moyens additionnels de la nacelle 402 permettent de synchroniser les déplacements du volet additionnel 404 avec ceux du volet inverseur 104, c'est-à-dire qu'ils coordonnent le passage du volet additionnel 404 de la position escamotée à la position active avec le passage du volet inverseur 104 de la position fermée à la position ouverte et inversement. Le volet additionnel 404 est monté basculant sur la structure de la nacelle 402 et les moyens additionnels prennent la forme d'une liaison mécanique comme par exemple une tringle additionnelle dont une première extrémité est montée articulée sur le volet additionnel 404 et dont la deuxième extrémité est montée articulée sur le volet inverseur 104.

L'invention a été plus particulièrement décrite dans le cas d'une nacelle sous une aile mais elle peut s'appliquer à une nacelle située à l'arrière du fuselage.

## Revendications

1. Nacelle (102, 402) pour un turboréacteur double flux (100), ladite nacelle (102, 402) comportant :
- un capot fixe (206) et un capot mobile (207) mobile en translation selon une direction de translation entre une position de fermeture dans laquelle il est rapproché du capot fixe (206) et une position d'ouverture dans laquelle il est éloigné du capot fixe (206) vers l'arrière,
- un actionneur (362) prévu pour déplacer le capot mobile (207) de la position de fermeture à la position d'ouverture et inversement,
- une fenêtre (210) délimitée en amont par le capot fixe (206) et en aval par le capot mobile (207), ladite fenêtre (210) étant ouverte entre une veine (202) d'un flux secondaire (208) et l'extérieur de la nacelle (102, 402),
- un volet inverseur (104) monté mobile en rotation autour d'un axe de rotation entre une position fermée dans laquelle il obture la fenêtre (210) et une position ouverte dans laquelle il n'obture pas la fenêtre (210), et
- un mécanisme d'entraînement (300) prévu pour coordonner le passage de la position fermée à la position ouverte du volet inverseur (104) avec le passage de la position de fermeture à la position d'ouverture du capot mobile (207) et inversement, ledit mécanisme d'entraînement (300) comprenant :
- deux paliers (360), chacun étant monté fixe sur une structure de la nacelle (102, 402),
- pour chaque palier (360), un bras de levier (364) dont une première extrémité est montée mobile en rotation sur le palier (360) et dont une deuxième extrémité est montée fixe sur le volet inverseur (104),
- pour chaque bras de levier (364), une glissière (366) solidaire du capot mobile (207), chaque glissière (366) comprenant une partie rectiligne (368) dont l'axe est parallèle à la direction de translation du capot mobile (207) et une partie incurvée (370) qui prolonge vers l'avant la partie rectiligne (368),
- pour chaque bras de levier (364), une tringle (372) dont une première extrémité est montée articulée sur le bras de levier (364), et
- pour chaque glissière (366), un coulisseau (373) monté mobile en translation sur la glissière (366) et monté articulé à une deuxième extrémité de la tringle (372).

2. Nacelle (402) selon la revendication 1, **caractérisée en ce qu'**elle comprend en outre un volet additionnel (404) monté mobile en rotation entre une position escamotée dans laquelle il ne se positionne pas dans la veine (202) et une position active dans laquelle il se positionne en travers de la veine (202) et prolonge le volet inverseur (104) en position ouverte dans la veine (202), et **en ce qu'**elle comporte des moyens additionnels qui coordonnent le passage du volet additionnel (404) de la position escamotée à la position active avec le passage du volet inverseur (104) de la position fermée à la position ouverte et inversement.

3. Turboréacteur double flux (100) comportant un moteur (20) et une nacelle (102, 402) selon l'une des revendications 1 ou 2 entourant le moteur (20), et où une veine (202) d'un flux secondaire (208) est délimitée entre la nacelle (102, 402) et le moteur (20).

4. Aéronef (10) comportant au moins un turboréacteur double flux (100) selon la revendication 3.

## Patentansprüche

1. Gondel (102, 402) für ein Zweistrom-Turbostrahltriebwerk (100), wobei die Gondel (102, 402) aufweist:
- eine ortsfeste Haube (206) und eine bewegliche Haube (207), die gemäß einer Translationsrichtung zwischen einer Schließstellung, in der sie der ortsfesten Haube (206) angenähert ist, und einer Öffnungsstellung translationsbeweglich ist, in der sie nach hinten von der ortsfesten Haube (206) entfernt ist,
- einen Stellantrieb (362), der vorgesehen ist, um die bewegliche Haube (207) von der Schließstellung in die Öffnungsstellung und umgekehrt zu verschieben,
- ein Fenster (210), das stromaufwärts von der ortsfesten Haube (206) und stromabwärts von der beweglichen Haube (207) begrenzt wird, wobei das Fenster (210) zwischen einer Strömung (202) eines Sekundärstroms (208) und der Außenseite der Gondel (102, 402) offen ist,
- eine Schubumkehrklappe (104), die zwischen einer geschlossenen Stellung, in der sie das Fenster (210) verschließt, und einer offenen Stellung, in der sie das Fenster (210) nicht verschließt, um eine Drehachse drehbeweglich montiert ist, und
- einen Antriebsmechanismus (300), der vorgesehen ist, um den Übergang der Schubumkehrklappe (104) von der geschlossenen Stellung in die offene Stellung mit dem Übergang der beweglichen Haube (207) von der Schließstellung in die Öffnungsstellung und umgekehrt zu koordinieren, wobei der Antriebsmechanismus (300) enthält:
- zwei Lager (360), die je ortsfest auf eine Struktur der Gondel (102, 402) montiert sind,
- für jedes Lager (360) einen Hebelarm (364), von dem ein erstes Ende drehbeweglich auf das Lager (360) montiert ist und von dem ein zweites Ende ortsfest auf die Schubumkehrklappe (104) montiert ist,
- für jeden Hebelarm (364) eine fest mit der beweglichen Haube (207) verbundene Gleitschiene (366), wobei jede Gleitschiene (366) einen geradlinigen Teil (368), dessen Achse parallel zur Translationsrichtung der beweglichen Haube (207) ist, und einen gekrümmten Teil (370) enthält, der den geradlinigen Teil (368) nach vorne verlängert,
- für jeden Hebelarm (364) eine Stange (372), von der ein erstes Ende gelenkig an den Hebelarm (364) montiert ist, und
- für jede Gleitschiene (366) einen Schieber (373), der translationsbeweglich auf die Gleitschiene (366) und gelenkig an ein zweites Ende der Stange (372) montiert ist.

2. Gondel (402) nach Anspruch 1, **dadurch gekennzeichnet, dass** sie außerdem eine zusätzliche Klappe (404) enthält, die zwischen einer eingezogenen Stellung, in der sie sich nicht in der Strömung (202) positioniert, und einer aktiven Stellung drehbeweglich montiert ist, in der sie sich quer zur Strömung (202) positioniert und die Schubumkehrklappe (104) in offener Stellung in der Strömung (202) verlängert, und dass sie zusätzliche Einrichtungen aufweist, die den Übergang der zusätzlichen Klappe (404) von der eingezogenen Stellung in die aktive Stellung mit dem Übergang der Schubumkehrklappe (104) von der geschlossenen Stellung in die offene Stellung und umgekehrt koordinieren.

3. Zweistrom-Turbostrahltriebwerk (100), das einen Motor (20) und eine Gondel (102, 402) nach einem der Ansprüche 1 oder 2 aufweist, die den Motor (20) umgibt, und wobei eine Strömung (202) eines Sekundärstroms (208) zwischen der Gondel (102, 402) und dem Motor (20) begrenzt ist.

4. Luftfahrzeug (10), das mindestens ein Zweistrom-Turbostrahltriebwerk (100) nach Anspruch 3 aufweist.

## Claims

1. Nacelle (102, 402) for a turbofan (100), said nacelle (102, 402) comprising:
- a fixed cowl (206) and a mobile cowl (207) mobile in translation in a translation direction between a closing position in which it is close to the fixed cowl (206) and an opening position in which it is far aft of the fixed cowl (206),
- an actuator (362) intended for moving the mobile cowl (207) from the closing position to the opening position, and vice versa,
- a window (210) delimited on the upstream side by the fixed cowl (206) and on the downstream side by the mobile cowl (207), said window (210) being open between a duct (202) for a bypass flow (208) and the exterior of the nacelle (102, 402),
- a reverser flap (104) mounted mobile in rotation about a rotation axis between a closed position in which it obstructs the window (210) and an open position in which it does not obstruct the window (210), and
- a drive mechanism (300) designed to coordinate the passage from the closed position to the open position of the reverser flap (104) with the passage from the closing position to the opening position of the mobile cowl (207) and vice versa, said drive mechanism (300) comprising:
- two bearings (360), each being mounted fixedly on a structure of the nacelle (102, 402),
- for each bearing (360), a lever arm (364) of which a first end is mounted mobile in rotation on the bearing (360) and of which a second end is mounted fixedly on the reverser flap (104),
- for each lever arm (364), a rail (366) integral with the mobile cowl (207), each rail (366) comprising a straight portion (368) of which the axis is parallel to the direction of translation of the mobile cowl (207), and a curved portion (370) that extends the straight portion (368) towards the front,
- for each lever arm (364), a rod (372) of which a first end is mounted in an articulated manner on the lever arm (364), and
- for each rail (366), a slider (373) that is mounted so as to be mobile in translation on the rail (366) and is mounted so as to be articulated to a second end of the rod (372).

2. Nacelle (402) according to Claim 1, **characterized in that** it further comprises an additional flap (404) mounted mobile in rotation between a retracted position in which it is not positioned in the duct (202) and an active position in which it is positioned across the duct (202) and extends the reverser flap (104) in the open position in the duct (202), and **in that** it comprises additional means that coordinate the passage of the additional flap (404) from the retracted position to the active position with the passage of the reverser flap (104) from the closed position to the open position and vice versa.

3. Turbofan (100) comprising an engine (20) and a nacelle (102, 402) according to either of Claims 1 and 2 surrounding the engine (20), and in which a duct (202) for a bypass flow (208) is delimited between the nacelle (102, 402) and the engine (20).

4. Aircraft (10) comprising at least one turbofan (100) according to Claim 3.
